# EUROPEAN PATENT SPECIFICATION

(11) **EP 3 917 790 B1**
(45) Date of publication and mention of the grant of the patent: **30.11.2022**
(21) Application number: 20705515.3
(22) Date of filing: 22.01.2020
(51) Int. Cl.: B60C 11/12, B60C 11/16

(54) **CAR TYRE**
FAHRZEUGREIFEN
PNEUMATIQUE

(30) Priority: 28.01.2019 IT 201900001233
(43) Date of publication of application: 08.12.2021
(73) Proprietor: Pirelli Tyre S.p.A., 20126 Milano (IT)
(72) Inventor: CASAROTTO, Giovanni, 20126 Milano (IT); PUTTI, Alberto Maria, 20126 Milano (IT); BELLUZZO, Damiano Leonardo, 20126 Milano (IT)
(74) Representative: Fabiano, Piero
(86) International application number: PCT/IB2020/050486
(87) International publication number: WO 2020/157606

(56) References cited:
- EP-A1- 3 081 400
- EP-A1- 3 202 593
- EP-A2- 1 088 685
- DE-A1-102007 053 609

## Description

### Field of the invention

The present invention relates to a car tyre. In particular, the present invention relates to a studdable car tyre. By studded tyre is generally meant as a tyre particularly suitable for driving on icy or snowy surfaces. It is typically characterised by a tread band containing a plurality of non-slip elements (hereinafter referred to as "studs") partially protruding from the radially outer surface of the tread band. The tread band is further equipped with a tread pattern suitable for use on snowy and/or icy terrain and shows a plurality of longitudinal and transverse grooves, which define a corresponding plurality of blocks and/or ribs in which the studs are inserted. A studded tyre generally has about 200/400 studs. Studdable tyre, however, generally means a tyre whose tread band is equipped with a tread pattern suitable for use on snowy and/or icy terrain and has seats for inserting the studs. Inserting the studs in the respective seats transforms the studdable tyre into a studded tyre.

### Prior art

The following documents describe some examples of studded tyres: WO2017081873, WO2018198759, WO02/068221, WO02/68222, WO2004/056588, WO2008/074353, EP2217456, EP3202593, EP2202096, EP3098090 and JP509838.

EP1088685 and EP3081400 showing studded tyres according to the preamble of claim 1.

### Summary of the invention

Studded tyres generally require both traction and braking qualities, particularly on snowy and/or icy surfaces.

To obtain traction and braking qualities on snowy surfaces, the tread band is equipped with sipes. The sipes are small notches, formed on the blocks of the tread band, extended from the tread surface of the tyre towards the inside of the block. The function of the sipes is to offer additional gripping elements compared to the grooves, in the case of driving on snowy surfaces and to retain a certain amount of snow, thus improving the grip to the roadbed.

To obtain traction qualities on ice, the tread band is equipped with studs which, thanks to their portion (pin) protruding from the tread surface, improve the gripping characteristics of the tyre on the icy roadbed.

However, the Applicant has noticed that these characteristics are conflicting with each other. In fact, the more the tread band is characterised by a high number of sipes and/or a significant extension thereof, the greater the ability of the tread band to capture snow for the benefit of the driveability of the tyre on the snowy roadbed. However, the Applicant has found that in this case the presence and/or extension of the sipes affects the stiffness of the tread band, in particular at the studs, thus causing an undesired movement of the studs during the passage in the footprint area and/or a lifting of the block portions surrounding the same studs, thus decreasing their grip effectiveness on the icy roadbed.

To reduce this phenomenon, it has been proposed to eliminate the presence of the sipes in a portion of limited extension of the tread band, provided around the studs.

However, through extensive simulations, the Applicant has found that even this solution does not allow to obtain traction/braking performance on both icy and snowy roadbeds, since in order to maintain adequate stiffness, the dimension of the tread portion without sipes around the studs must be significantly extended, so that the tread has too limited a number of sipes and/or sipes of too limited extension, to the detriment of the driveability of the tyre on snowy roadbed.

The Applicant did not reach a solution: by increasing in fact the extension of the tread band portion without sipes at the studs, it was able to increase the stiffness of the tread band but lost performance on snowy roadbed. The significantly reduced number of sipes per block surface did not allow, in fact, to obtain adequate performance on snowy roadbed. On the contrary, by increasing the presence of sipes around the stud, the performance of the tyre on snowy surfaces increased, but the resizing of the area without sipes around the stud impacted on the performance of the tyre on the icy roadbed.

Finally, the Applicant understood that the solution to the conflicting conditions described above could not be obtained only by balancing the area extension without sipes around the stud against an adequate number of sipes per block surface, but by making, on the block, at least one further portion provided with reduced depth sipes, which is circumferentially adjacent to a portion of significant dimension without sipes, which is arranged around the stud seat and preferably interposed between the stud seat and block portions with full-depth sipes.

In a first aspect, the invention relates to a tyre comprising a tread band on which a plurality of blocks defined by grooves and provided with a radially outer surface is formed, wherein at least some of said blocks comprise:
- a seat for a stud;
- a first portion, peripheral with respect to the seat and arranged around said seat; said first portion being without sipes and having a minimum dimension equal to or greater than 12 mm;
- at least one second portion, arranged externally to the first portion and extended in a circumferential direction starting from the first portion, and having a maximum circumferential dimension and a maximum axial dimension between 50% and 150% of the minimum dimension of the first portion;
- at least one second portion comprising at least one sipe having a segment in the at least one second portion having a depth, starting from the radially outer surface of each respective block, less than or equal to 2 mm.

The Applicant has made a studdable tyre, which has a tread band provided with blocks that have deep sipes and seats for accommodating the studs, therefore suitable for use on snowy and/or icy surfaces.

The blocks provided with the seats for studs have a widely extended portion adjacent to the seat for the studs, without sipes so as to stiffen the tread band at the same seat.

The tyre produced is also equipped, again on the blocks provided with the seats for the studs, with a second portion provided with sipes equipped with at least one segment with limited depth interposed between the portion of the block without sipes and the remaining portion of the block provided with deep sipes.

Contrary to what has been considered up to now, in which limited portions of the block without sipes were provided at the studs, which are immediately followed by portions provided with deep sipes, the Applicant has verified that better performance can be obtained both on snowy and icy surfaces by providing, away from the stud, the aforesaid portion provided with sipes equipped with at least one segment having limited depth.

Without wishing to be bound to any particular theory, the Applicant believes that the presence of a block portion provided with sipes equipped with at least one segment with limited depth interposed between the portion without sipes, adjacent to the seat for accommodating the stud, and the remaining block portion equipped with deep sipes allows to obtain a less discontinuous and gradually increasing stiffness distribution of the block, thus optimising the conflicting demands of block stiffness. Such stiffness distribution of the block increases, in fact, at the same time the grip efficacy of the stud on icy surfaces and of the block on snowy surfaces, thanks to a high amount of sipes present per block surface. The sipes equipped with at least one segment of limited depth act, in fact, in any case to trap the snow, without excessively reducing the stiffness of such portion, which will work, therefore, synergistically with the stiffness of the adjacent portion without sipes of the block, so as to offer a wider area around the stud, distinguished by a good overall stiffness.

For the purposes of the present invention, the following definitions apply:
The term "equatorial plane" of the tyre means a plane perpendicular to the rotation axis of the tyre and which divides the tyre into two substantially equal parts.

"Circumferential" direction means a direction generally oriented according to the rotation direction of the tyre or, at most, inclined by about 20° with respect to the rotation direction of the tyre.

"Axial" direction means a direction substantially parallel to the rotation axis of the tyre or, at most, slightly inclined (at most, of about 20°) with respect to such rotation axis of the tyre. The axial direction is generally substantially perpendicular to the circumferential direction.

The term "effective width" referred to the tread band means the width of the radially outermost portion of the tread band (from edge to edge) intended for the contact with the ground.

"Central region" of the tread band means a portion of the tread band circumferentially extended around an equatorial plane of said tyre for a width equal to at least 40% of the effective width of the tread band, preferably for a width between 50% and 60% of such effective width.

The central region can be extended or not symmetrically with respect to the equatorial plane.

"Shoulder regions" of the tread band mean the portions of the tread band extended circumferentially to the opposite sides of the central region in an axially outer position of the tread band.

Preferably, each shoulder region is extended for a width equal to at least 10% of the effective width of the tread band.

The term "groove" means a furrow formed in a portion of the tread band, having a width greater than or equal to 1.5 mm and preferably a depth greater than 3 mm.

The term "sipe" means a channel formed in a portion of the tread band, having a width, substantially for its entire extension, less than 1.5 mm, preferably less than or equal to 1 mm. Typically, a sipe has, on the radially outer surface of the tread band, an extension greater than its width, preferably a sipe has, on the radially outer surface of the tread band, an extension greater than or equal to 3mm.

Generally, the function of the sipes is to offer additional gripping elements compared to the grooves, in the case of driving on snowy surfaces and to retain a certain amount of snow, thus improving the grip to the roadbed.

The width of the sipes and grooves is intended to be measured with a new tyre at the radially outer surface of the tread band.

The inclination of a sipe, or a segment thereof, with respect to an axial direction identified on the tread band is defined by the angle between 0° and 90° formed by the extension direction of the sipe with the aforesaid axial direction. Two (or more) sipes are inclined "concordantly" when their pattern is increasing or decreasing for both, when considered on a Cartesian plane positioned on the tread band (tangentially thereto) with the axis of ordinates parallel to the circumferential direction and the axis of abscissas parallel to the tyre axis. Consequently, two sipes are inclined "discordantly" or "counter-inclined" when their pattern is, when considered in such Cartesian plane, increasing for one groove and decreasing for the other groove.

The present invention, in one or more preferential aspects, can comprise one or more of the characteristics set forth below.

Preferably, the aforesaid at least one sipe is the first sipe intercepted circumferentially away from the first portion.

Advantageously, the segment extends according to an extension direction forming a β angle relative to an axial direction between 0° and 45°.

Conveniently, the first portion has a maximum dimension less than or equal to 25 mm, preferably less than or equal to 20 mm.

Preferably, the segment has a depth less than 1.5 mm.

Conveniently, the segment has a depth equal to or greater than 0.5 mm.

Advantageously, the segment has an extension equal to at least 50% of the overall extension of the sipe, measured along its extension direction, in the second portion.

Preferably, the segment depth increases as the β angle increases.

Conveniently, the segment extension with respect to the overall extension of the sipe, measured along its extension direction, in the second portion, increases as the β angle increases.

Advantageously, the segment extension, according to the extension direction of the sipe in the second portion, is equal to or greater than 70% of the overall sipe extension measured along its extension direction, in the second portion, for β angles equal to or greater than 20°.

Conveniently, the second portion may comprise, circumferentially away from the first portion, a first and a second sipe each having a respective segment in the second portion having a depth, from the radially outer surface of each respective block, less than or equal to 2 mm, the respective segment of the first sipe having extension, along its extension direction, greater than the respective segment of the second sipe.

Advantageously, at least some of the blocks comprise two second portions.

Conveniently, the two second portions are arranged opposite relative to the first portion, this way the block increases the stiffness of the tread band around the stud both before and after the same stud, thus achieving improvements both in traction and in braking.

Preferably, the two second portions are circumferentially aligned, this way it is possible to obtain a more homogeneous behaviour of the block both in traction and in braking.

Advantageously, the aforesaid two second portions have respective maximum axial dimensions which differ from each other by a maximum of 30%.

Conveniently, at least some of the blocks comprise at least one sipe arranged at least partially outside the second portion and having a maximum depth greater than 5 mm.

Preferably, the tread band comprises a first and a second shoulder region and a central region extending through an equatorial plane of the studdable tyre, wherein the central region has a width equal to at least 40% of an effective width of the tread band.

Conveniently, at least one block of the aforesaid some of the blocks is arranged at least in a first or second shoulder region.

Preferably, at least one block of the aforesaid some of the blocks is arranged at least in the central region.

Conveniently, at least 30% of at least some of the blocks comprises a single sipe in the second portion.

More preferably, at least 50% of at least some of the blocks comprise a single sipe in the second portion.

This way, it is possible to optimise the length of the blocks, in particular those of the shoulder, also in relation to low noise requirements of the tyre.

Preferably, the second portion comprises three sipes at most.

According to another aspect, the present invention concerns a studded tyre comprising a studded tyre as previously described and wherein the seat for a stud of at least some of the blocks houses a stud.

Further characteristics and advantages of the invention will become more apparent from the detailed description of some preferred, but not exclusive, embodiments of a studdable car tyre according to the present invention.

### Brief description of the drawings

Such description will be set forth hereunder with reference to the accompanying drawings, provided only by way of example and thus without limitations, in which:

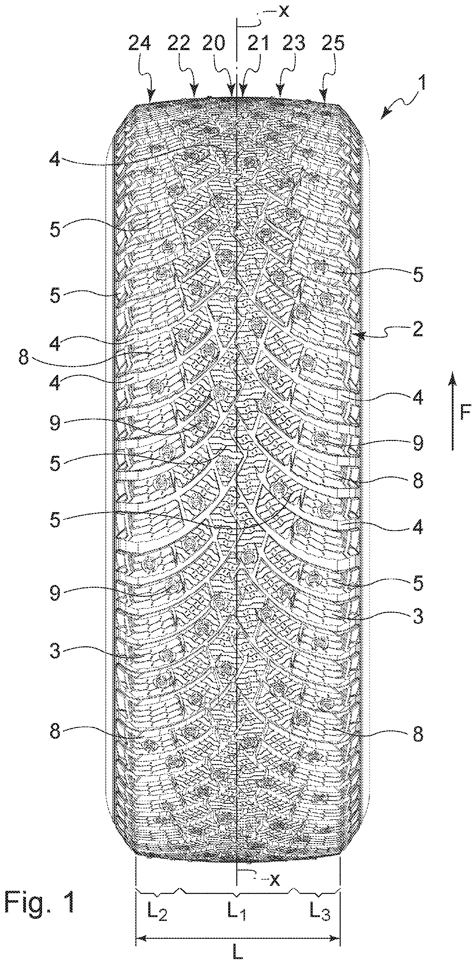

- Figure 1 is a front perspective view of an example of a tyre for vehicle wheels, made according to the present invention;
- Figure 2 is a schematic view on enlarged scale of a portion of the tread band of the tyre of figure 1;
- Figure 3 is a schematic view on enlarged scale of a studded block of the tyre of figure 1; and
- Figure 4 is a chart of the simulated braking behaviour of two studded blocks of the tyre of figure 1, respectively with the second portion provided with a sipe equipped with a limited-depth segment (dashed line) and with the second portion provided with a sipe without a limited-depth segment (continuous line).

### Detailed description of embodiments of the invention

With reference to the appended figures, 1 generally denotes a studded tyre for car wheels according to the present invention.

The studded tyre 1 comprises a conventional tyre structure not shown in the appended figures, as well as a tread band 2 on which a tread surface 3 arranged radially outwardly relative to the tread band 2 and intended for the contact with a roadbed.

The tyre 1 has a conventional generically toroidal shape developed around an axis of rotation defining, on the tread surface 3, an axial direction Y parallel thereto, and crossed by an equatorial plane X-X perpendicular to the axis of rotation and defining, on the tread surface 3, a circumferential direction parallel thereto.

The studded tyre 1 has a nominal section width of about 205 mm with a rim diameter of 16 inches.

The tyre 1 is a directional-type tyre, in which a preferential rolling direction of the tyre, depicted in the figures with the arrow F, is defined.

With reference to the exemplary embodiment shown in the figures, the tread band 2 comprises a central region L1 and two shoulder regions L2, L3. The central region L1, arranged astride the equatorial plane X-X, has a width equal to at least 40% of an effective width L of said tread band 2. Preferably, the central region L1 has a width equal to at least 50% of an effective width L of said tread band 2.

On the other hand, each shoulder region L2, L3 has a width less than 30% of the effective width L of the tread band 2. Preferably, each shoulder region L2, L3 has a width less than 20% of the effective width L of the tread band 2.

On the tread band 2, a plurality of grooves all denoted by 4, which at least partially delimit a plurality of blocks 5, is formed. In particular, in the tyre depicted in the figure, four circumferential rows 20, 21, 22, 23 of blocks 5 in the central region L1 and two circumferential rows 24, 25 of blocks 5 in the shoulder regions L2, L3, can be observed, in detail a circumferential row for each shoulder region L2, L3.

The central region L1 has four circumferential rows of blocks 20, 21, 22, 23, specifically, two circumferential rows 20, 21 of central blocks, opposite each other relative to the equatorial plane X-X and two circumferential rows 22, 23 of side blocks opposite each other relative to the circumferential rows of central blocks.

Each block 5 has a radially outer surface 6 belonging to the tread surface 3, the respective side walls 7 extending from the perimeter edge thereof.

Preferably, a plurality of sipes 8 is formed on the blocks 5. The sipes 8 can have a depth between 0.5 and 15 mm and a width less than or equal to 1.5 mm.

The sipes 8 can have a substantially constant width along their extension.

The sipes 8 of each block 5 are mutually parallel and have an extension direction forming an angle with respect to an axial direction between 0° and 45°.

The sipes 8 of each circumferential row of blocks 20, 21, 22, 23 can have, as in the embodiment shown in the figures, different extension directions with respect to the sipes 8 of the circumferential rows of axially adjacent blocks.

In the embodiment shown in the figures, the sipes 8 of the circumferential rows 24, 25 of the blocks of the shoulder regions L2, L3 have an extension direction that is counter-inclined with respect to that of the sipes 8 of the circumferential rows 22, 23 of the side blocks.

Still with reference to the embodiment shown in the figures, the sipes 8 have a swerved pattern, that is, with segments of different inclinations. In other words, the sipes 8 can be formed by first straight segments 30 parallel to the extension direction of the same sipes, of which at least some, which are staggered with respect to the extension direction, are joined up by second straight segments 31 shorter than the first straight segments 30 and counter-inclined with respect to the latter.

The sipes 8 have a maximum depth Pmax greater than 5 mm, preferably greater than 6 mm, for example equal to 7 mm.

On at least some blocks 5, to guarantee performance on icy surfaces, a plurality of seats for studs 12 are provided, each shaped to accommodate a stud made of metal material.

Each stud 9 comprises a base embedded inside the tread band 2, a head 10 radially outwardly relative to the base, and a gripping projection 11 extended radially from the head 10.

The stud 9 is accommodated in a seat 12 for studs, which is formed on the tread band 2 and has the configuration of the stud 9. The seat 12 for studs comprises a radially inner portion embedded in the block and intended to accommodate the base of the stud, and a radially outer portion intended to accommodate the head 10 of the stud.

In particular, the radially outer portion of the seat 12 for studs has a shape substantially equal to the shape of the head 10 of the stud and a depth, from the outer surface 6, slightly greater (e.g. about 0.3 mm) than the height of the head 10. This way, the head 10 of the stud is in a slightly lowered position or, at most, coplanar with respect to the tread surface 3, while the gripping projection 11 forms the portion of the stud radially protruding from the tread surface 3, the latter being intended to affect the icy roadbed.

In the preferred example described here, the head 10 of the stud 9 has a generically trapezoidal shape, with the major base facing the rolling direction F.

In the embodiment shown in the figures, in order to increase the stiffness of the tread band at the studs, a first peripheral portion 15 of tread band 2, without sipes 8, preferably also without grooves 4, is provided around each seat 12 for studs.

The first portion 15 could have recesses to accumulate the ice dust abraded by the same stud when travelling on icy ground. Unlike the sipes, such recesses are not designed to trap snow in order to increase the grip of the block on snowy ground, but configured to temporarily collect the ice dust abraded by the stud during its passage in the footprint area.

Typically for this purpose, such reservoirs appear as shallow, but relatively large basins. For example, such reservoirs may have a limited depth of even less than 2 mm, but a width greater than that of the sipes, for example greater than 3 mm, for a substantial part of their extension. The presence of such recesses does not substantially modify the stiffness of the first portion 15, in particular if said first portion has a minimum dimension greater than or equal to 12 mm.

In the preferential embodiment shown in the figures, the first peripheral portion 15 extends on the block 5 starting from the seat 12 for studs so as to have a minimum dimension Dmin equal to or greater than 12 mm.

Preferably, the first peripheral portion 15 extends on the block 5 starting from the seat 12 for studs so as to have a maximum dimension Dmax less than or equal to 25 mm, preferably less than or equal to 20 mm.

In the embodiment shown, the Dmin is identified in the axial direction.

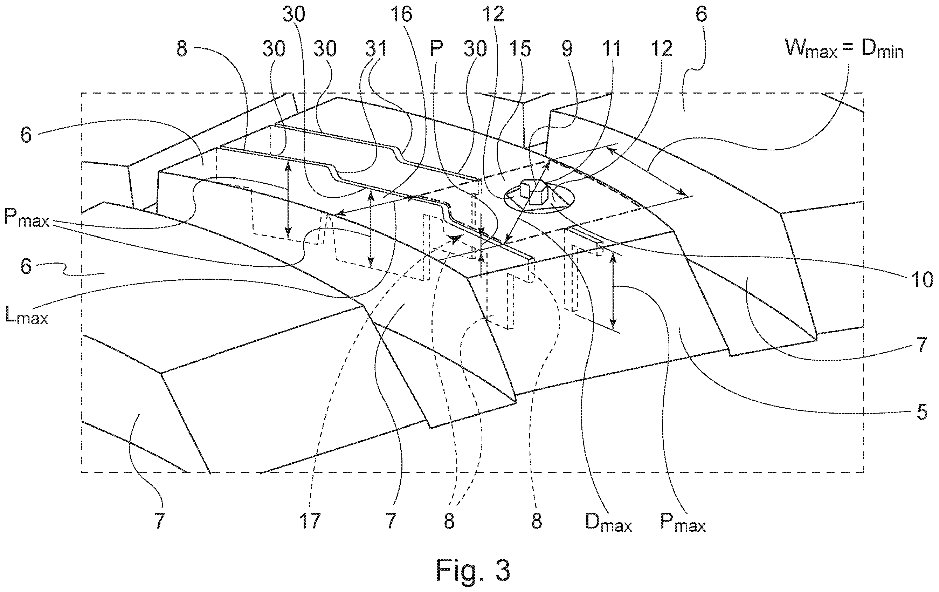

Still with reference to the embodiment shown in the figures and in particular in figure 3, it is possible to identify a maximum dimension Dmax of the first peripheral portion 15 such as the distance in the circumferential direction between two successive sipes 8 in a circumferential direction and opposite each other relative to the stud or between a sipe 8 and the next side wall 7 of the block 5 along a circumferential direction and opposite each other relative to the stud 9.

Preferably, the first peripheral portion 15 is arranged around each seat 12 for studs.

Externally around the first peripheral portion 15, at least on some of the blocks 5 equipped with a seat 12 for studs, at least one second portion 16 is provided. In the embodiment shown in the figures, all the blocks 5 equipped with a seat 12 for studs have at least one second portion 16 of tread band arranged outside the first peripheral portion 15.

The second portion 16 has an extension substantially directed in a circumferential direction.

The second portion 16 has a maximum circumferential dimension Lmax and a maximum axial dimension W between 50% and 150% of the minimum dimension Dmin of the first peripheral portion 15.

Preferably, the second portion 16 has a maximum axial dimension W between 90% and 110% of the minimum dimension Dmin of the first peripheral portion 15.

In the embodiment shown in the figures, the maximum axial dimension W of the second portion 16 is substantially equal to the minimum axial dimension Dmin of the first peripheral portion 15.

The second portion 16 has a maximum circumferential dimension Lmax equal to or less than 30 mm.

Preferably, the second portion 16 has a maximum circumferential dimension Lmax equal to or less than 20 mm.

The maximum circumferential dimension Lmax of the second portion can be obtained as the greatest of the distances in the circumferential direction between the first peripheral portion 15 and that between the grooves 4, which delimits the block 5 in the circumferential direction more distant from the seat 12 for the stud.

The second portion 16, with respect to the first peripheral portion 15, on the same block 5, can be arranged in an adjacent position circumferentially following the first peripheral portion 15 or in an adjacent position circumferentially preceding the first peripheral portion 15, depending on the circumferential position of the stud 9 in the block 5.

The second portion 16, with respect to the first peripheral portion 15, on the same block 5, can also be arranged jointly both in an adjacent position circumferentially following the first peripheral portion 15 and in an adjacent position circumferentially preceding the first peripheral portion 15, in this case there are two second portions 16 for a seat 12 for a stud, which are better described below.

The Applicant believes that, in fact, in order to have studded blocks best dedicated for achieving braking performance, the stud must be positioned in the block 5 as far away as possible from the side wall 7 of the circumferentially preceding block 5, according to the rolling direction F of the tyre, in this case we are talking about pro-braking blocks.

The Applicant also believes that, in order to have studded blocks best dedicated for achieving tractive performance, the stud must be positioned in the block 5 as close as possible to the circumferentially following side wall 7 of the block 5, according to the rolling direction F of the tyre, in this case we speak of pro-traction blocks.

In fact, since the stud 9 bends in one direction or the other, depending on whether the tyre is in traction or braking, the position of the stud inside the block 5 is relevant for the performance thereof. More precisely, moving the stud 9 forward, in accordance with the rolling direction F of tyre 1, traction performance is favoured, whereas moving it to the other side of the block, braking performance is favoured.

Vice versa, the Applicant believes that in order to have a balance of traction and braking performance, the stud 9 must be positioned in a substantially intermediate circumferential position in the block 5.

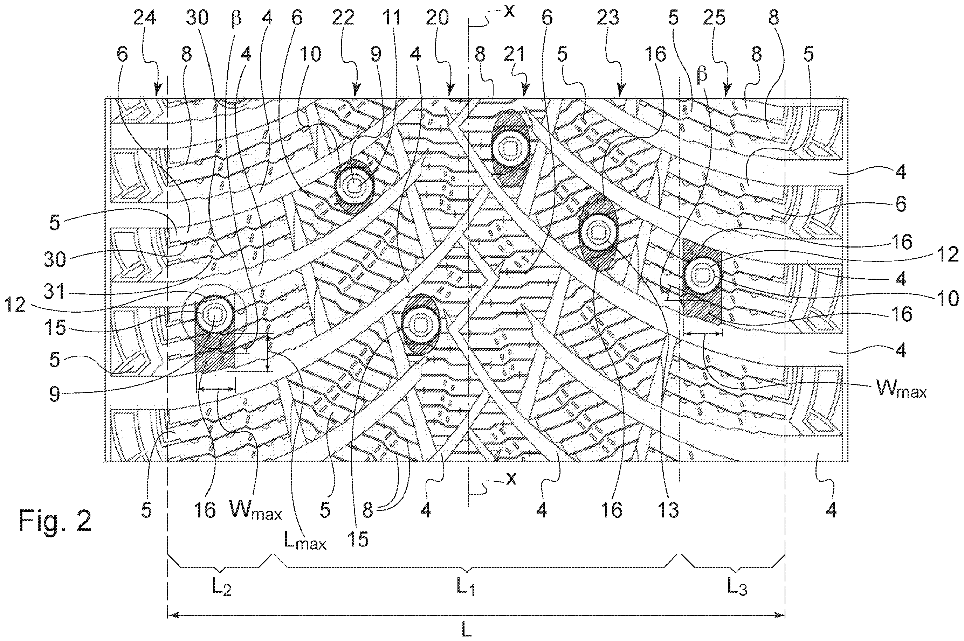

In case of pro-traction blocks, the second portion 16 is positioned, in a circumferential direction, adjacent to the first peripheral portion 15 but arranged following this and the stud 9, as for example shown in Figure 2 with the block 5 of the shoulder region L2.

In case of pro-braking blocks, the second portion 16 is positioned, in a circumferential direction, adjacent to the first peripheral portion 15 but arranged before this and the stud 9, in accordance with the rolling direction of the tyre.

In case of blocks 5, which must have both traction and braking performances, there are two second portions 16 both positioned, in a circumferential direction, adjacent to the first peripheral portion 15 but arranged opposite relative to the first peripheral portion 15, as for example shown in Figure 2 with the block 5 of the shoulder region L3. In case where there are two second portions 16, both positioned in a circumferential direction adjacent to the first peripheral portion 15 but arranged opposite relative to the latter, the second portions 16 are generally aligned in the axial direction.

Preferably in this case, the two second portions 16 have respective maximum axial dimensions W, which differ from each other by a maximum of 30%.

In the embodiment shown in the figures, the two second portions 16 have respective, substantially equal, maximum axial dimensions W. In the event that there are two second portions 16 both positioned, in a circumferential direction, adjacent to the first peripheral portion 15 but arranged opposite relative to the latter, the second portions 16 can have the same maximum circumferential dimension Lmax.

For blocks 5 which have preponderant circumferential dimensions with respect to the axial dimensions, for example in the embodiment shown in the figures, the blocks 5 of the rows 20, 21, 22, 23, in case where there are two second portions 16 both positioned, in the circumferential direction, adjacent to the first peripheral portion 15 but arranged opposite relative to the latter, the second portions 16 can be seen as an ellipse centred on the first peripheral portion 15, which has a minor axis coinciding with the maximum axial dimension of the first peripheral portion 15 and second axis which coincides with the sum of the maximum circumferential dimensions Lmax of the two second portions 16.

In the second portion 16, there are some sipes 8 or parts thereof. In detail, some of the sipes 8 can extend throughout the second portion 16 and externally to the latter or alternatively, the sipes 8 present in the second portion 16, all or only some, could extend only in the second portion 16.

In the embodiment shown in the figures, at least 30 of the blocks 5 of tyre 1 have only one sipe 8 in the second portion 16.

Preferably, each second portion 16 comprises three sipes 8 at most.

At least some, preferably all the sipes 8 present in the second portion 16 are distinguished by having at least one limited depth segment 17.

In the event that only one of the sipes 8 present in the second portion 16 is distinguished by having at least one limited depth segment 17, it is preferably the first sipe 8 intercepted circumferentially away from the first portion 15 to have the aforesaid segment 17.

In the embodiment shown in the figures, the sipes 8 present in the second portion 16 therefore have at least one segment 17 equipped with a reduced depth with respect to the depth of the segments with the maximum depth Pmax of the same sipe 8, which are external to the second portion 16 or with respect to the sipes 8 provided with segments with the maximum depth Pmax, which do not intersect the second portion 16.

Preferably, the limited depth segment 17 has depth P equal to or less than 2 mm. Even more preferably, the limited depth segment 17 has depth P equal to or less than 1.5 mm.

Preferably, the limited depth segment 17 has depth P equal to or greater than 0.5 mm.

In case where the second portion 16 comprises two sipes 8 circumferentially away from the first portion 15, respectively a first and a second sipe 8, each having a respective limited depth segment 17, the respective segment 17 of the first sipe 8 has an extension, along its extension direction, greater than the respective segment 17 of the second sipe 8.

In other words, if in the second portion 16 there are more sipes, each equipped with a limited depth segment 17, the extension of the limited depth segment decreases as the distance of the same segment from the seat 12 for the stud increases.

Preferably, the limited depth segments 17, present in the second portion 16, have an extension direction forming an angle of inclination β with respect to an axial direction between 0° and 45°.

The angle of inclination β of the extension direction of the limited depth segment 17 can be determined as the weighted average of the angles of inclination of the segments forming the same segment or, alternatively, however with a certain approximation, as the angle of inclination of a straight line substantially passing through one of the first extension points and one of the last extension points of the same segment.

Preferably, the depth P of the limited depth segment 17 varies as the angle of inclination β varies.

In particular, as the angle of inclination β of the extension direction of the limited depth segment 17 in the second portion 16 increases, the depth of the limited depth segment 17 increases and vice versa, as the angle of inclination β of the extension direction of the sipes 8 in the second portion 16 decreases, the depth of the limited depth segment 17 decreases.

The limited depth segment 17 has an extension, according to the extension direction of the sipe 8 in the second portion 16, equal to at least 50% of the overall extension, measured along its extension direction, of the sipe 8 in the second portion 16.

The limited depth segment 17 can have an extension, according to the extension direction of the sipe 8 in the second portion 16, equal to 100% of the overall extension, measured along its extension direction, of the sipe 8 in the second portion 16. In other words, the limited depth segment 17 can coincide with the overall extension of the sipe 8 in the second portion 16 or with a fraction thereof.

Even the extension of the limited depth segment 17 in the second portion 16 varies as the inclination of the extension direction of the limited depth segment 17 varies, in particular of the angle of inclination β of the extension direction of the limited depth segment 17 in the second portion 16.

Preferably, the extension of the limited depth segment 17, according to the extension direction of the limited depth segment 17 in the second portion, varies as the angle of inclination β of the extension direction of the limited depth segment 17 in the second portion 16 varies.

In particular, as the angle of inclination β of the extension direction of the limited depth segment 17 increases, the extension of the limited depth segment 17 in the second portion 16 increases and vice versa, as the angle of inclination β of the extension direction of the limited depth segment 17 decreases, the extension of the limited depth segment 17 in the second portion 16 decreases.

Preferably, the extension of the limited depth segment 17, according to the extension direction of the limited depth segment 17 in the second portion 16, is equal to or greater than 70% of the overall extension, measured along its extension direction, of the sipe 8 in the second portion 16, for β equal to or greater than 20°.

In other words, as the angle of inclination β of the extension direction of the limited depth segment 17 in the second portion 16 increases between 20° and 45°, the limited depth segment 17 increases its extension in the second portion 16, according to the extension direction of the same sipe, going from 70% to 100% of the overall extension of the sipe 8 in the second portion 16.

On the other hand, as the angle of inclination β of the extension direction of the limited depth segment 17 in the second portion 16 increases between 0° and 20°, the limited depth segment 17 increases its extension in the second portion 16, according to the extension direction of the same sipe, going from 50% to 70% of the overall extension of the sipe 8 in the second portion 16.

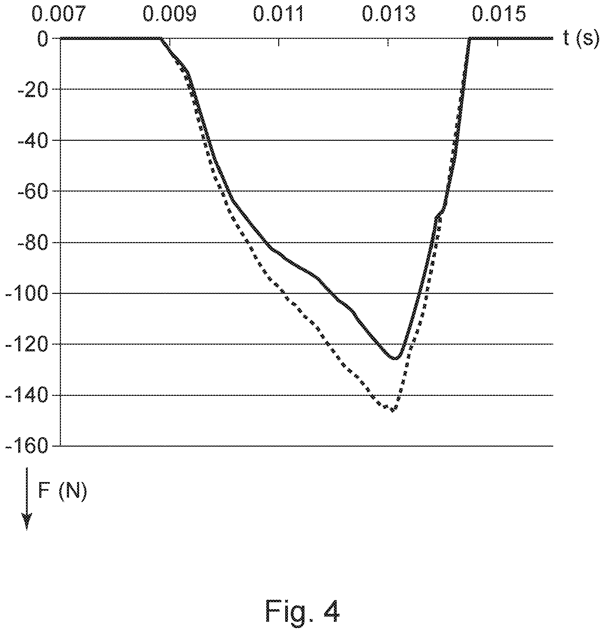

Figure 4 shows a graph of the simulated braking performance of a first block 5 (whose performance is depicted by a solid line) and a second block 5 (whose performance is depicted by a dashed line), which are completely similar in shape and dimension, in shape, number and arrangement of the sipes 8, and in shape and arrangement of the stud 9 in the same block. However, the two blocks 5 differ in that in the first block 5, the sipe 8 inside the second portion 16 has a depth equal to the maximum depth Pmax equal to 7 mm, whereas in the second block 5 (of the type shown in Figure 3), the sipe 8 inside the second portion 16 has a reduced depth equal to 1 mm.

The first and second blocks 5 are pro-braking blocks, in other words in both cases the stud 9 is arranged in a rearward position, with respect to the rolling direction, in the respective block 5 and is therefore found to have a sipe 8 in front of it.

The graph shows on abscissa the time expressed in seconds (s), while on ordinate it shows the force expressed in newtons (N) that the stud exchanges with the ice.

The simulation is a 3D Finite Element Method (FEM) simulation with Pre/Post Processor: Abaqus 2017 and Solver: Abaqus 2017.

The results show that, as for the braking, in the condition wherein the pin of the stud 9 is twisted towards the sipe 8 placed in front of it, a substantial difference of forces is found: the second block 5 provided with limited depth sipe 8 increases, therefore, the force the stud 9 exchanges with the ice.

Similar results can be obtained in case of pro-traction studs, in this case the presence of a reduced depth sipe will improve the performance in terms of traction compared to the block with a full-depth sipe.

Several changes can be made to the embodiments described in detail, anyhow remaining within the scope of the invention protection, defined by the following claims.

## Claims

1. Studdable tyre comprising a tread band (2) in which a plurality of blocks (5) defined by grooves (4) and having a radially outer surface is formed, wherein at least some of said blocks (5) comprise:
- a seat (12) for a stud (9);
- a first portion (15), peripheral to said seat (12) and located around said seat (12); said first portion (15) lacking sipes (8) and having a minimum dimension equal to or greater than 12 mm; **characterized in that**
- at least one second portion (16), outwardly located relative to said first portion (15) and extending in a circumferential direction starting from said first portion (15), and having a maximum circumferential dimension (Lmax) and a maximum axial dimension (W) comprised between 50% and 150% of said minimum dimension (Dmin) of said first portion;
- said at least one second portion (16) comprising at least one sipe (8) having a segment (17) in said at least one second portion (16) having a depth (P) starting from said radially outer surface of each respective block smaller than or equal to 2 mm.

2. Studdable tyre according to claim 1, wherein said at least one sipe (8) is the first sipe met moving circumferentially away from said first portion (15).

3. Studdable tyre according to claim 1 or 2, wherein said first segment (17) extends according to an extension direction forming an angle β relative to an axial direction comprised between 0° and 45°.

4. Studdable tyre according to any one of the previous claims, wherein said first portion has a maximum dimension (DMax) smaller than or equal to 25 mm, preferably smaller than or equal to 20 mm.

5. Studdable tyre according to any one of the previous claims, wherein said segment (17) has a depth (P) smaller than 1.5 mm, preferably said segment (17) has a depth (P) equal to or greater than 0.5 mm

6. Studdable tyre according to any one of the previous claims, wherein said segment (17) has an extension equal to at least 50% of the overall extension of the sipe (8), measured along its extension direction, in said second portion (16).

7. Studdable tyre according to any one of the previous claims, wherein the depth (P) of said segment (17) increases as said angle β increases.

8. Studdable tyre according to any one of the previous claims, wherein the extension of said segment (17), relative to the overall extension of the sipe (8), measured along the extension direction thereof, in said second portion (16), increases as said angle β increases.

9. Studdable tyre according to any one of the previous claims, wherein the extension of said segment (17), according to the extension direction of said sipe (8) in said second portion (16), is equal to or greater than 70% of the overall extension of the sipe (8), measured along the extension direction thereof, in said second portion (16), when β is equal to or greater than 20°.

10. Studdable tyre according to any one of the previous claims, wherein said at least one second portion (16) comprises, moving circumferentially away from said first portion (15), a first and a second sipe (8), each having a respective segment (17) in said at least one second portion (16) having a depth (P) starting from said radially outer surface of each respective block (5) smaller than or equal to 2 mm; said respective segment (17) of said first sipe (8) having an extension, along its extension direction, greater than said respective segment (17) of said second sipe (8).

11. Studdable tyre according to any one of the previous claims, wherein at least some of said blocks (5) comprise two second portions (16), preferably said two second portions (16) are located opposite to each other relative to said first portion (15), more preferably said two second portions (16) are circumferentially substantially aligned.

12. Studdable tyre according to any one of the previous claims, wherein said at least some of said blocks (5) comprise at least one sipe (8) located at least partially outwardly relative to said at least one second portion (16) and having a maximum depth (Pmax) greater than 5mm.

13. Studdable tyre according to any one of the previous claims, wherein at least 30% of said at least some of said blocks (5) comprise only one sipe (8) in said second portion.

14. Studdable tyre according to any one of the previous claims, wherein said second portion (16) comprises at most three sipes (8).

15. Studded tyre (1) comprising a studdable tyre according to any one of the previous claims, wherein said seat for a stud (12) receives a stud (9).

## Patentansprüche

1. Bespikebarer Reifen, umfassend einen Laufflächenring (2), in welchem eine Vielzahl von Blöcken (5) gebildet ist, die durch Nuten (4) definiert sind und eine radial äußere Oberfläche aufweisen, wobei zumindest einige der Blöcke (5) umfassen:
- einen Sitz (12) für einen Spike (9);
- einen ersten Abschnitt (15), der peripher zu dem Sitz (12) und um den Sitz (12) herum angeordnet ist; wobei der erste Abschnitt (15) keine Lamellen (8) aufweist und eine minimale Dimension gleich oder größer als 12 mm aufweist; **gekennzeichnet durch**
- zumindest einen zweiten Abschnitt (16), der weiter nach außen relativ zu dem ersten Abschnitt (15) angeordnet ist und sich in einer Umfangsrichtung ausgehend von dem ersten Abschnitt (15) erstreckt,
und der eine maximale Dimension in Umfangsrichtung (Lmax) und eine maximale axiale Dimension (W) zwischen 50 % und 150 % der minimalen Dimension (Dmin) des ersten Abschnitts aufweist;
- wobei der zumindest eine zweite Abschnitt (16) zumindest eine Lamelle (8) umfasst, die ein Segment (17) in dem zumindest einen zweiten Abschnitt (16) aufweist, das eine Tiefe (P) ausgehend von der radial äußeren Oberfläche eines jeden jeweiligen Blocks von weniger als oder gleich 2 mm aufweist.

2. Bespikebarer Reifen nach Anspruch 1, wobei die zumindest eine Lamelle (8) die erste bei der Bewegung in Umfangsrichtung von dem ersten Abschnitt (15) weg angetroffene Lamelle ist.

3. Bespikebarer Reifen nach Anspruch 1 oder 2, wobei das erste Segment (17) sich gemäß einer Erstreckungsrichtung erstreckt, die einen Winkel β relativ zu einer axialen Richtung von zwischen 0° und 45° bildet.

4. Bespikebarer Reifen nach einem der vorhergehenden Ansprüche, wobei der erste Abschnitt eine maximale Dimension (DMax) von weniger als oder gleich 25 mm, vorzugsweise weniger als oder gleich 20 mm aufweist.

5. Bespikebarer Reifen nach einem der vorhergehenden Ansprüche, wobei das Segment (17) eine Tiefe (P) von weniger als 1,5 mm aufweist, wobei das Segment (17) vorzugsweise eine Tiefe (P) gleich oder größer als 0,5 mm aufweist.

6. Bespikebarer Reifen nach einem der vorhergehenden Ansprüche, wobei das Segment (17) in dem zweiten Abschnitt (16) eine Erstreckung gleich zumindest 50 % der Gesamterstreckung der Lamelle (8), gemessen entlang ihrer Erstreckungsrichtung, aufweist.

7. Bespikebarer Reifen nach einem der vorhergehenden Ansprüche, wobei die Tiefe (P) des Segments (17) mit zunehmendem Winkel β zunimmt.

8. Bespikebarer Reifen nach einem der vorhergehenden Ansprüche, wobei die Erstreckung des Segments (17) in dem zweiten Abschnitt (16) relativ zu der Gesamterstreckung der Lamelle (8), gemessen entlang der Erstreckungsrichtung derselben, mit zunehmendem Winkel β zunimmt.

9. Bespikebarer Reifen nach einem der vorhergehenden Ansprüche, wobei die Erstreckung des Segments (17) gemäß der Erstreckungsrichtung der Lamelle (8) in dem zweiten Abschnitt (16) gleich oder größer als 70 % der Gesamterstreckung der Lamelle (8) ist, gemessen entlang der Erstreckungsrichtung derselben in dem zweiten Abschnitt (16), wenn β gleich oder größer als 20° ist.

10. Bespikebarer Reifen nach einem der vorhergehenden Ansprüche, wobei der zumindest eine zweite Abschnitt (16) in seiner Bewegung in Umfangsrichtung von dem ersten Abschnitt (15) weg eine erste und eine zweite Lamelle (8) umfasst, die jeweils ein jeweiliges Segment (17) in dem zumindest einen zweiten Abschnitt (16) aufweisen, das eine Tiefe (P) ausgehend von der radial äußeren Oberfläche eines jeden jeweiligen Blocks (5) von weniger als oder gleich 2 mm aufweist; wobei das jeweilige Segment (17) der ersten Lamelle (8) eine größere Erstreckung entlang ihrer Erstreckungsrichtung aufweist als das jeweilige Segment (17) der zweiten Lamelle (8).

11. Bespikebarer Reifen nach einem der vorhergehenden Ansprüche, wobei zumindest einige der Blöcke (5) zwei zweite Abschnitte (16) umfassen, wobei die zwei zweiten Abschnitte (16) vorzugsweise einander relativ zu dem ersten Abschnitt (15) entgegengesetzt angeordnet sind, und die zwei zweiten Abschnitte (16) noch bevorzugter in Umfangsrichtung im Wesentlichen ausgerichtet sind.

12. Bespikebarer Reifen nach einem der vorhergehenden Ansprüche, wobei zumindest einige der Blöcke (5) zumindest eine Lamelle (8) umfassen, die zumindest teilweise weiter außen relativ zu dem zumindest einen zweiten Abschnitt (16) angeordnet sind und eine maximale Tiefe (Pmax) von mehr als 5 mm aufweisen.

13. Bespikebarer Reifen nach einem der vorhergehenden Ansprüche, wobei zumindest 30 % der zumindest einigen der Blöcke (5) nur eine Lamelle (8) in dem zweiten Abschnitt umfassen.

14. Bespikebarer Reifen nach einem der vorhergehenden Ansprüche, wobei der zweite Abschnitt (16) höchstens drei Lamellen (8) umfasst.

15. Spikereifen (1), umfassend einen bespikebaren Reifen nach einem der vorhergehenden Ansprüche, wobei der Sitz für einen Spike (12) einen Spike (9) aufnimmt.

## Revendications

1. Pneu à clouter comprenant une bande de roulement (2) dans laquelle une pluralité de blocs (5) définis par des rainures (4) et ayant une surface radialement externe est formée, dans lequel au moins certains desdits blocs (5) comprennent :
- un siège (12) pour un clou (9) ;
- une première partie (15), périphérique audit siège (12) et située autour dudit siège (12) ; ladite première partie (15) étant dépourvue de lamelles (8) et ayant une dimension minimale supérieure ou égale à 12 mm ; **caractérisé en ce que**
- au moins une deuxième partie (16), située vers l'extérieur par rapport à ladite première partie (15) et s'étendant dans une direction circonférentielle à partir de ladite première partie (15), et ayant une dimension circonférentielle maximale (Lmax) et une dimension axiale maximale (W) comprises entre 50% et 150% de ladite dimension minimale (Dmin) de ladite première partie ;
- ladite au moins une deuxième partie (16) comprenant au moins une lamelle (8) ayant un segment (17) dans ladite au moins une deuxième partie (16) ayant une profondeur (P) à partir de ladite surface radialement externe de chaque bloc respectif inférieure ou égale à 2 mm.

2. Pneu à clouter selon la revendication 1, dans lequel ladite au moins une lamelle (8) est la première lamelle rencontrée en s'éloignant circonférentiellement de ladite première partie (15).

3. Pneu à clouter selon la revendication 1 ou 2, dans lequel ledit premier segment (17) s'étend selon une direction d'extension formant un angle β par rapport à une direction axiale compris entre 0° et 45°.

4. Pneu à clouter selon l'une quelconque des revendications précédentes, dans lequel ladite première partie a une dimension maximale (DMax) inférieure ou égale à 25 mm, de préférence inférieure ou égale à 20 mm.

5. Pneu à clouter selon l'une quelconque des revendications précédentes, dans lequel ledit segment (17) a une profondeur (P) inférieure à 1,5 mm, de préférence ledit segment (17) a une profondeur (P) supérieure ou égale à 0,5 mm.

6. Pneu à clouter selon l'une quelconque des revendications précédentes, dans lequel ledit segment (17) a une extension égale à au moins 50% de l'extension globale de la lamelle (8), mesurée le long de sa direction d'extension, dans ladite deuxième partie (16).

7. Pneu à clouter selon l'une quelconque des revendications précédentes, dans lequel la profondeur (P) dudit segment (17) augmente à mesure que ledit angle β augmente.

8. Pneu à clouter selon l'une quelconque des revendications précédentes, dans lequel l'extension dudit segment (17), par rapport à l'extension globale de la lamelle (8), mesurée le long de sa direction d'extension, dans ladite deuxième partie (16), augmente à mesure que ledit angle β augmente.

9. Pneu à clouter selon l'une quelconque des revendications précédentes, dans lequel l'extension dudit segment (17), selon la direction d'extension de ladite lamelle (8) dans ladite deuxième partie (16), est supérieure ou égale à 70% de l'extension globale de la lamelle (8), mesurée le long de sa direction d'extension, dans ladite deuxième partie (16), lorsque β est supérieur ou égal à 20°.

10. Pneu à clouter selon l'une quelconque des revendications précédentes, dans lequel ladite au moins une deuxième partie (16) comprend, en s'éloignant circonférentiellement de ladite première partie (15), des première et deuxième lamelles (8), ayant chacune un segment respectif (17) dans ladite au moins une deuxième partie (16) ayant une profondeur (P) à partir de ladite surface radialement externe de chaque bloc respectif (5) inférieure ou égale à 2 mm ; ledit segment respectif (17) de ladite première lamelle (8) ayant une extension, le long de sa direction d'extension, supérieure à celle dudit segment respectif (17) de ladite deuxième lamelle (8).

11. Pneu à clouter selon l'une quelconque des revendications précédentes, dans lequel au moins certains desdits blocs (5) comprennent deux deuxièmes parties (16), de préférence lesdites deux deuxièmes parties (16) sont situées à l'opposé l'une de l'autre par rapport à ladite première partie (15), plus préférablement lesdites deux deuxièmes parties (16) sont sensiblement alignées circonférentiellement.

12. Pneu à clouter selon l'une quelconque des revendications précédentes, dans lequel lesdits au moins certains desdits blocs (5) comprennent au moins une lamelle (8) située au moins partiellement vers l'extérieur par rapport à ladite au moins une deuxième partie (16) et ayant une profondeur maximale (Pmax) supérieure à 5 mm.

13. Pneu à clouter selon l'une quelconque des revendications précédentes, dans lequel au moins 30% desdits au moins certains desdits blocs (5) ne comprennent qu'une seule lamelle (8) dans ladite deuxième partie.

14. Pneu à clouter selon l'une quelconque des revendications précédentes, dans lequel ladite deuxième partie (16) comprend au plus trois lamelles (8).

15. Pneu clouté (1) comprenant un pneu à clouter selon l'une quelconque des revendications précédentes, dans lequel ledit siège pour un clou (12) reçoit un clou (9).
